# FASCICULE DE BREVET EUROPEEN

(11) **EP 1 332 014 B1**
(45) Date de publication et mention de la délivrance du brevet: **12.11.2008**
(21) Numéro de dépôt: 01983639.4
(22) Date de dépôt: 26.10.2001
(51) Int. Cl.: B23K 1/00

(54) **PROCEDE DE FABRICATION D'UN ECHANGEUR DE CHALEUR A PLAQUES BRASEES ET ECHANGEUR DE CHALEUR OBTENU PAR CE PROCEDE**
VERFAHREN ZUM HERSTELLEN EINES GELÖTETEN PLATTENWÄRMTAUSCHERS, UND HERGESTELLTER PLATTENWÄRMTAUSCHER
METHOD FOR MAKING A HEAT EXCHANGER WITH SOLDERED PLATES AND RESULTING HEAT EXCHANGER

(30) Priorité: 27.10.2000 FR 0013858
(43) Date de publication de la demande: 06.08.2003
(73) Titulaire: L'AIR LIQUIDE, Société Anonyme pour l'Etude et l'Exploitation des Procédés Georges Claude, 75007 Paris (FR); Nordon Cryogenie, 88194 Golbey Cedex (FR)
(72) Inventeur: WAGNER, Marc, F-94100 Saint-Maur (FR); WASTIAUX, Sophie, F-93270 Sevran (FR); NICLOUT, Norbert, F-88380 Archettes (FR)
(74) Mandataire: Mercey, Fiona Susan
(86) Numéro de dépôt international: PCT/FR2001/003344
(87) Numéro de publication internationale: WO 2002/034448

(56) Documents cités:
- WO-A-96/06705
- DE-A- 3 613 596
- FR-A- 2 721 384

## Description

L'invention concerne le domaine des échangeurs de chaleur fabriqués par assemblage de plaques brasées.

Les vaporiseurs/condenseurs des appareils de séparation d'air sont généralement, depuis quelques dizaines d'années, réalisés en aluminium ou en alliage d'aluminium au moyen de plaques brasées entre elles. Ils peuvent aussi être réalisés en cuivre, nickel, acier inoxydable, ou tout autre métal brasable. Ces échangeurs sont généralement constitués de deux ou plusieurs circuits, définis grâce à la configuration des plaques qui les constituent et des éventuels éléments de séparation des plaques tels que des ondes d'échange thermique, que l'échangeur peut renfermer. Les différents circuits de circulation des fluides sont reliés au reste de l'installation grâce à un système de tuyauteries soudées sur l'échangeur.

Le dépôt du matériau servant à constituer la brasure se fait classiquement par dépôt d'une poudre, de fils ou de feuillards sur les zones de l'échangeur à braser. Ce dépôt peut être effectué soit sur les plaques de l'échangeur, soit sur les ondes d'échange thermique. Compte tenu du nombre et de la longueur des zones à braser, l'opération de dépôt du matériau de brasure est très coûteuse et peu fiable. Dans le cas des poudres, se pose le problème de leur répartition sur la zone de brasage. Dans le cas du dépôt de fils ou de feuillards, ceux-ci peuvent présenter des ondulations et des plis qui rendent l'efficacité de la brasure aléatoire. D'autre part, de manière générale, les matériaux utilisés pour la brasure sont souvent des alliages nobles, contenant par exemple de l'argent en quantité importante. Ces alliages étant très coûteux, il serait intéressant de minimiser autant que possible la quantité d'alliage de brasure utilisée, sans pour autant compromettre la qualité du brasage.

DE-A- 3613596 décrit un procédé selon le préambule de la revendication 1.

Le but de l'invention est de procurer aux fabricants d'échangeurs de chaleur à plaques un mode d'assemblage par brasage à la fois moins coûteux et plus fiable que les modes d'assemblage classiques.

A cet effet l'invention a pour objet un procédé selon la revendication 1.

Ledit échangeur peut comporter des ondes de séparation à l'intérieur desdits circuits, et ledit matériau de brasage est déposé soit sur lesdites plaques, soit sur lesdites ondes.

Ledit matériau de brasage est préférentiellement déposé en couche de 5 à 50 µm d'épaisseur.

Il comprend deux au moins des éléments choisis parmi l'argent, l'arsenic, le cuivre, le manganèse, le nickel, l'étain, le phosphore, le silicium, le béryllium, le tellure.

Préalablement au brasage, on peut réaliser un traitement thermique pour la diffusion desdites couches superposées les unes dans les autres.

Comme on l'aura compris, l'invention consiste à déposer en utilisant un procédé électrolytique le matériau grâce auquel sera réalisée la brasure. Le matériau de brasage peut être déposé, au choix du fabricant, soit sur les plaques, soit sur les ondes d'échange thermique. Le dépôt sur les plaques est cependant le plus avantageux, car ainsi on utilise de moindres quantités de matériau de brasage.

Les matériaux de brasage pouvant être déposés par ce procédé sont l'argent, l'arsenic, le cuivre, le manganèse, le nickel, l'étain, le phosphore, le silicium, le béryllium, le tellure. Ils peuvent être déposés seuls ou, le cas échéant, sous forme de co-dépôt. De manière générale, on s'efforce de réaliser le dépôt électrolytique de matériaux ou d'alliages qu'il est classiquement connu d'utiliser comme matériaux de brasure pour l'assemblage des échangeurs de chaleur connus.

L'invention est particulièrement avantageuse dans le cas où on souhaite déposer une couche d'argent. En effet, il est possible par ce procédé d'obtenir des épaisseurs de dépôt inférieures à 10 µm de manière très régulière et sur de grandes surfaces. On est ainsi assuré d'obtenir une qualité du dépôt optimale, pour une quantité d'argent utilisée minimale.

Une fois le dépôt du matériau de brasage effectué et l'échangeur assemblé, la brasure est effectuée en introduisant l'échangeur dans un four qui le porte à une température adéquate pour la réalisation de la brasure, comme il est déjà connu.

Lorsqu'on souhaite utiliser un matériau de brasage qui comporte une pluralité d'éléments dans des proportions déterminées, et qu'il n'est pas possible d'obtenir cet alliage sous forme d'une couche unique qui serait obtenue par un co-dépôt électrolytique, on peut procéder de la façon suivante. On réalise tout d'abord le dépôt électrolytique d'une couche d'un premier élément entrant dans la composition du matériau de brasage. Puis on réalise sur cette première couche le dépôt d'une deuxième couche d'un autre des éléments entrant dans la composition de l'alliage de brasage, puis éventuellement, le dépôt d'autres couches d'autres éléments que l'on souhaite voir présents dans l'alliage de brasage. On peut ensuite réaliser un traitement thermique de diffusion permettent de réunir les diverses couches superposées dont on vient de parler en une couche unique d'alliage plus ou moins homogène en composition, préalablement à l'opération de brasage. Mais dans certains cas, il est possible de réaliser ce mélange des différentes couches lors de l'opération de brasage elle-même. L'alliage de brasage de la composition désirée est donc obtenu pendant l'opération de brasage. Le choix entre ces deux méthodes dépend notamment de l'existence ou non de la possibilité d'une diffusion des différents matériaux les uns dans les autres à des températures inférieures à la température de brasage.

L'invention est applicable à tout type d'échangeur à plaques assemblées par brasage, quelle que soit son application, les vaporiseurs/condenseurs d'appareil de séparation d'air n'étant qu'un exemple d'application privilégié.

## Revendications

1. Procédé de fabrication d'un échangeur de chaleur à plaques du type comportant une pluralité de plaques en un matériau brasable définissant des circuits pour la circulation de fluides et assemblées les unes aux autres par brasage, ledit brasage ayant lieu après le dépôt d'un matériau de brasage sur les zones à braser, **caractérisé en ce que** ledit matériau de brasage est déposé au moyen d'une solution électrolytique, **en ce que** le matériau de brasage est déposé sous forme de plusieurs couches superposées composées chacune d'un élément différent et **en ce que** l'on réalise, par brasage ou par traitement thermique avant brasage, la diffusion desdites couches les unes dans les autres.

2. Procédé selon la revendication 1, **caractérisé en ce que** ledit échangeur comporte des ondes de séparation à l'intérieur desdits circuits, et **en ce que** ledit matériau de brasage est déposé sur lesdites plaques .

3. Procédé selon la revendication 1 ou 2, **caractérisé en ce que** ledit échangeur comporte des ondes de séparation à l'intérieur desdits circuits, et **en ce que** ledit matériau de brasage est déposé sur lesdites ondes.

4. Procédé selon l'une des revendications 1 à 3, **caractérisé en ce que** ledit matériau de brasage est déposé en couche de 5 à 50 µm d'épaisseur.

5. Procédé selon l'une des revendications 1 à 4, **caractérisé en ce que** le matériau de brasage comprend deux au moins des éléments choisis parmi l'argent, l'arsenic, le cuivre, le manganèse, le nickel, l'étain, le phosphore, le silicium, le béryllium, le tellure.

6. Procédé selon la revendication 1, **caractérisé en ce que,** préalablement au brasage, on réalise un traitement thermique pour la diffusion desdites couches superposées les unes dans les autres.

## Claims

1. Process for manufacturing a plate heat exchanger of the type comprising a plurality of plates made of a brazeable material, which define circuits for the circulation of fluids and are joined together by brazing, said brazing taking place after a brazing material has been deposited on the regions to be brazed, **characterized in that** said brazing material is deposited by means of an electrolytic solution, **in that** the brazing material is deposited in the form of several superposed layers, each composed of a different element and **in that** said layers are made to diffuse into one another by brazing or, prior to brazing, by heat treatment.

2. Process according to Claim 1, **characterized in that** said exchanger includes separating fins inside said circuits and **in that** said brazing material is deposited on said plates.

3. Process according to Claim 1 or 2, **characterized in that** said exchanger includes separating fins inside said circuits and **in that** said brazing material is deposited on said fins.

4. Process according to one of Claims 1 to 3, **characterized in that** said brazing material is deposited as a layer from 5 to 50 µm in thickness.

5. Process according to one of Claims 1 to 4, **characterized in that** the brazing material comprises at least two of the elements chosen from silver, arsenic, copper, manganese, nickel, tin, phosphorus, silicon, beryllium and tellurium.

6. Process according to Claim 1, **characterized in that**, prior to brazing, a heat treatment is carried out in order to make said superposed layers diffuse into one another.

## Patentansprüche

1. Verfahren zur Herstellung eines Plattenwärmetauschers jener Art, die mehrere Platten aus einem lötbaren Material enthält, die Kreisläufe für die Zirkulation von Fluiden definieren und durch Löten aneinander befestigt sind, wobei das Löten nach dem Ablagern eines Lotmaterials auf die zu lötenden Bereiche erfolgt, **dadurch gekennzeichnet, dass** das Lotmaterial mittels einer elektrolytischen Lösung abgelagert wird, dass das Lotmaterial in Form von mehreren übereinander angeordneten Schichten abgelagert wird, die jeweils aus einem anderen Element bestehen, und dass durch Löten oder durch thermische Behandlung vor dem Löten das Ineinanderdiffundieren der Schichten realisiert wird.

2. Verfahren nach Anspruch 1, **dadurch gekennzeichnet, dass** der Tauscher Trennwellungen im Inneren der Kreisläufe aufweist und dass das Lotmaterial auf den Platten abgelagert wird.

3. Verfahren nach Anspruch 1 oder 2, **dadurch gekennzeichnet, dass** der Tauscher Trennwellungen im Inneren der Kreisläufe aufweist und dass das Lotmaterial auf den Wellungen abgelagert wird.

4. Verfahren nach einem der Ansprüche 1 bis 3, **dadurch gekennzeichnet, dass** das Lotmaterial als eine Schicht mit einer Dicke von 5 bis 50 µm abgelagert wird.

5. Verfahren nach einem der Ansprüche 1 bis 4, **dadurch gekennzeichnet, dass** das Lotmaterial mindestens zwei Elemente umfasst, die unter Silber, Arsen, Kupfer, Mangan, Nickel, Zinn, Phosphor, Silizium, Beryllium und Tellur ausgewählt werden.

6. Verfahren nach Anspruch 1, **dadurch gekennzeichnet, dass** vor dem Löten eine thermische Behandlung zum Ineinanderdiffundieren der übereinander gelagerten Schichten durchgeführt wird.
